# EUROPÄISCHE PATENTSCHRIFT

(11) **EP 0 624 778 B1**
(45) Veröffentlichungstag und Bekanntmachung des Hinweises auf die Patenterteilung: **01.07.1998**
(21) Anmeldenummer: 94107106.0
(22) Anmeldetag: 06.05.1994
(51) Int. Cl.: G01D 5/16, G01P 13/04

(54) **Positionsmesseinrichtung**
Position measuring device
Dispositif de mesure de position

(30) Priorität: 14.05.1993 DE 4316221
(43) Veröffentlichungstag der Anmeldung: 17.11.1994
(73) Patentinhaber: Dr. Johannes Heidenhain GmbH, D-83292 Traunreut (DE)
(72) Erfinder: Metz, Gerald, Ing., D-83368 St. Georgen (DE)

(56) Entgegenhaltungen:
- EP-A- 0 493 260
- GB-A- 2 163 852
- US-A- 4 845 456

## Beschreibung

Die Erfindung betrifft eine Positionsmeßeinrichtung gemäß dem Oberbegriff des Anspruches 1.

Eine derartige Positionsmeßeinrichtung wird insbesondere bei einer Bearbeitungsmaschine zur Messung der Relativlage eines Werkzeuges bezüglich eines zu bearbeitenden Werkstückes eingesetzt.

In der EP 0 151 002 B1 ist eine magnetische Positionsmeßeinrichtung zur Messung der Relativlage zweier zueinander beweglicher Objekte beschrieben, bei der eine periodische Meßteilung von einer Abtasteinheit gemäß Figur 19 mittels zweier Gruppen aus je vier magnetoresistiven Elementen zur Erzeugung von nullsymmetrischen Ausgangssignalen abgetastet wird. Die vier magnetoresistiven Elemente der beiden Gruppen mit den Ausgangssignalen der Phasenlagen 0° und 180° werden in Form einer Reihenschaltung zu einer ersten Halbbrückenschaltung und die magnetoresistiven Elemente der beiden Gruppen mit den Ausgangssignalen der Phasenlagen 90° und 270° in Form einer Reihenschaltung zu einer zweiten Halbbrückenschaltung verschaltet; an den Mittelabgriffen der beiden Halbbrückenschaltungen stehen zwei nullsymmetrische Ausgangssignale mit einem gegenseitigen Phasenversatz von 90° zur Gewinnung von Positionsmeßwerten in einer nachgeschalteten Auswerteeinrichtung an. Diese Positionsmeßeinrichtung weist aber den Nachteil auf, daß sich die Verbindungsleiterbahnen der magnetoresistiven Elemente mehrfach überkreuzen, so daß zwischen den in Schichttechnik aufgebrachten, sich überkreuzenden Verbindungsleiterbahnen eine Isolierschicht vorgesehen werden muß, deren notwendige Temperung eine Erhöhung der Hysterese der beiden nullsymmetrischen Ausgangssignale bewirkt. Dieses zusätzliche Vorsehen der Isolierschicht und der Überkreuzungsschicht verteuert die Abtasteinheit und kann zu einem erhöhten Ausschuß bei der Fertigung führen.

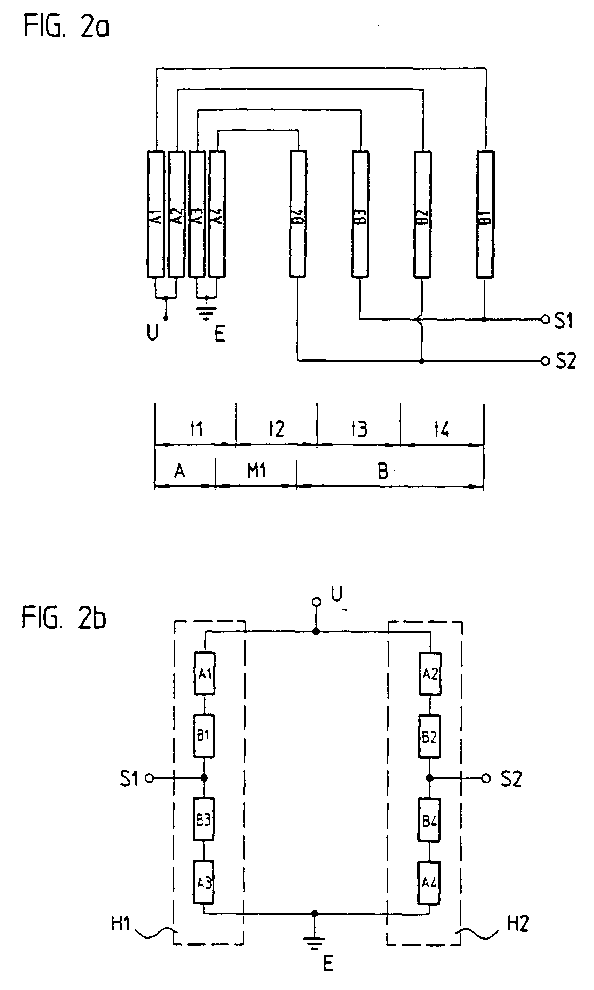

Der DE-PS 37 19 328 entnimmt man eine gleichartige magnetische Positionsmeßeinrichtung, bei der eine periodische Meßteilung von einer Abtasteinheit gemäß Figur 2A mittels vierer Gruppen aus je vier magnetoresistiven Elementen zur Erzeugung von nullsymmetrischen Ausgangssignalen abgetastet wird. Zur Vermeidung einer Überkreuzung der Verbindungsleiterbahnen sind die vier magnetoresistiven Elemente jeder Gruppe nicht mehr gemeinsam innerhalb einer Teilungsperiode der Meßteilung angeordnet; insbesondere besteht zwischen dem magnetoresistiven Element mit dem Ausgangssignal der Phasenlage 0° und dem magnetoresistiven Element mit dem Ausgangssignal der Phasenlage 180° (Gegentaktelemente) sowie zwischen dem magnetoresistiven Element mit dem Ausgangssignal der Phasenlage 90° und dem magnetoresistiven Element mit dem Ausgangssignal der Phasenlage 270° (Gegentaktelemente) derselben Gruppe in Meßrichtung ein Abstand von über fünf Teilungsperioden der Meßteilung. Es können daher nur Störeinflüsse herausgefiltert werden, die sich über mehr als fünf Teilungsperioden erstrecken, da in diesem Fall die Störeinflüsse die zusammengehörigen Gegentaktelemente gleichermaßen beeinflussen. Dagegen haben kurzwellige Störeinflüsse unter fünf Teilungsperioden einen nachteiligen Einfluß auf die Meßgenauigkeit.

Der Erfindung liegt die Aufgabe zugrunde, bei einer Positionsmeßeinrichtung der genannten Gattung eine Anordnung von magnetoresistiven Elementen anzugeben, bei der Überkreuzungen der Verbindungsleiterbahnen weitgehend vermieden werden und bei der auch kurzwellige Störeinflüsse keine Auswirkungen auf die Meßgenauigkeit haben.

Diese Aufgabe wird erfindungsgemäß durch die kennzeichnenden Merkmale des Anspruches 1 gelöst.

Die mit der Erfindung erzielten Vorteile bestehen insbesondere darin, daß durch die vorgeschlagene Anordnung der magnetoresistiven Elemente Überkreuzungen ihrer Verbindungsleiterbahnen vermieden werden, so daß sich eine Vereinfachung und Verbilligung im Aufbau der Abtasteinheit sowie hysteresefreie Ausgangssignale ergeben. Des weiteren werden kurzwellige Störeinflüsse auf die Signalparameter der gewonnenen Ausgangssignale wirksam kompensiert, so daß sich die Meßgenauigkeit und die Meßauflösung weiter erhöhen.

Vorteilhafte Weiterbildungen der Erfindung entnimmt man den Unteransprüchen.

Ausführungsbeispiele der Erfindung werden anhand der Zeichnung näher erläutert.
Es zeigen
- Figur 1: eine Längsansicht einer Positionsmeßeinrichtung,
- Figur 2a-h: eine erste Anordnung und Verschaltung von magnetoresistiven Elementen zu Halbbrücken und
- Figur 3a-f: eine zweite Anordnung und Verschaltung von magnetoresistiven Elementen zu Vollbrücken.

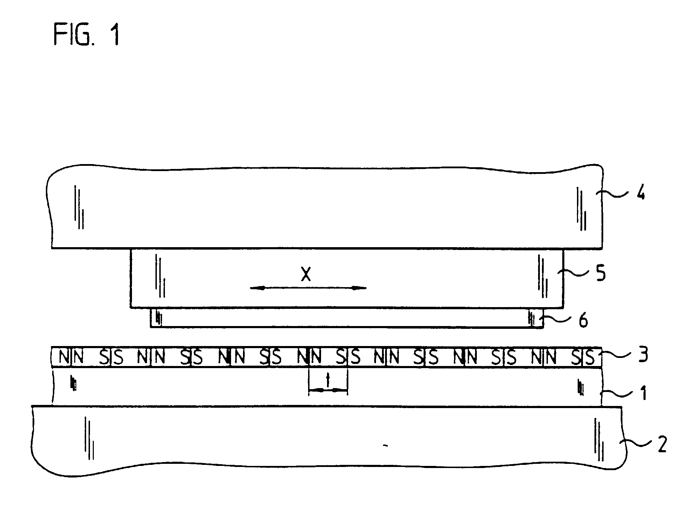

In Figur 1 ist schematisch in einer Längsansicht eine erste Positionsmeßeinrichtung gezeigt, bei der eine Maßverkörperung 1 aus einem magnetisierbaren Material in beliebiger Weise an einem ersten Objekt 2 befestigt ist. Die Maßverkörperung 1 weist auf einer Oberfläche eine periodische Meßteilung 3 mit in Meßrichtung X alternierend gegenpolig magnetisierten Bereichen NS auf, an deren Bereichsgrenzen zwei Nordpole NN bzw. zwei Südpole SS aneinandergrenzen. Die Meßteilung 3 besitzt eine Teilungsperiode t, die durch den Polabstand jedes Bereiches NS definiert ist. Mit einem zweiten Objekt 4 ist eine Abtasteinheit 5 verbunden, die die Meßteilung 3 der Maßverkörperung 1 zur Erzeugung von positionsabhängigen Ausgangssignalen abtastet, aus denen in einer nachgeschalteten Auswerteeinrichtung Positionsmeßwerte für die Relativlage der beiden Objekte 2, 4 gebildet werden. Diese beiden Objekte 2, 4 können durch zwei Maschinenteile einer nicht dargestellten Bearbeitungsmaschine gebildet sein. Die Abtasteinheit 5 ist mit einer Abtastplatte 6 versehen, auf deren freier Oberfläche zwei Gruppen A, B aus je vier magnetoresistiven Elementen An, Bn (n=1,2,3,4) angeordnet sind, die eine Grundanordnung bilden.

Nach Figur 2a erstrecken sich diese streifenförmigen magnetoresistiven Elemente An, Bn der beiden Gruppen A, B senkrecht zur Meßrichtung X und sind in Meßrichtung X parallel zueinander angeordnet. Die vier magnetoresistiven Elemente A1 bis A4 der ersten Gruppe A erstrecken sich über die erste Teilungsperiode t1 der Meßteilung 3 mit einem gegenseitigen Phasenversatz von einem Viertel der ersten Teilungsperiode t1, mit t1=t2=t3=tn=t. Es sind somit das erste magnetoresistive Element A1 mit dem Ausgangssignal der Phasenlage 0° an der ersten Position "0°", das zweite magnetoresistive Element A2 mit dem Ausgangssignal der Phasenlage 90° an der zweiten Position "90°", das dritte magnetoresistive Element A3 mit dem Ausgangssignal der Phasenlage 180° an der dritten Position "180°" und das vierte magnetoresistive Element A4 mit dem Ausgangssignal der Phasenlage 270° an der vierten Position "270°" der ersten Teilungsperiode t1 angeordnet.

Die vier magnetoresistiven Elemente B1 bis B4 der zweiten Gruppe B sind in den benachbarten Teilungsperioden t2, t3, t4 der Meßteilung 3 angeordnet. Der gegenseitige Abstand der magnetoresistiven Elemente B1 bis B4 beträgt 3t/4. Ausgehend von der Mitte M1 beider Gruppen A, B ist jeweils das N-te magnetoresistive Element An der einen Gruppe A mit dem N-ten magnetoresistiven Element Bn der anderen Gruppe B direkt elektrisch verbunden, also in Reihe geschaltet. Die jeweils miteinander verbundenen Elemente An, Bn der einen Gruppe An und der anderen Gruppe Bn weisen in Bezug zur Teilung die gleiche Phasenlage auf. Das Element A4 mit der Phasenlage 270° ist mit dem Element B4 mit der Phasenlage 270° in Reihe geschaltet, das Element A3 mit der Phasenlage 180° mit dem Element B3 mit der Phasenlage 180°, das Element A2 mit der Phasenlage 90° mit dem Element B2 mit der Phasenlage 90° und das Element A1 mit der Phasenlage 0° mit dem Element B1 mit der Phasenlage 0°. Die zwei Gruppen A, B der Grundanordnung sind um den Mittenabstand M1 einer Teilungsperiode t beabstandet.

Gemäß der Figur 2b werden die beiden magnetoresistiven Elemente A1, B1 mit den Ausgangssignalen der Phasenlage 0° im oberen Brückenzweig und die beiden magnetoresistiven Elemente A3, B3 mit den Ausgangssignalen der Phasenlage 180° im unteren Brückenzweig einer ersten Halbbrückenschaltung H1 sowie die beiden magnetoresistiven Elemente A2, B2 mit den Ausgangssignalen der Phasenlage 90° im oberen Brückenzweig und die beiden magnetoresistiven Elemente A4, B4 mit den Ausgangssignalen der Phasenlage 270° im unteren Brückenzweig einer zweiten Halbbrückenschaltung H2 jeweils in Reihe zusammengeschaltet; die beiden Halbbrückenschaltungen H1, H2 liegen jeweils mit einem Pol an einer Spannung U und mit dem anderen Pol an Masse E an, sind also parallel zusammengeschaltet. Bei der Meßbewegung der Abtasteinheit 5 bezüglich der Meßteilung 3 stehen am Mittelabgriff der ersten Halbbrückenschaltung H1 ein erstes nullsymmetrisches Ausgangssignal S1 mit der Phasenlage 0° und am Mittelabgriff der zweiten Halbbrückenschaltung H2 ein zweites nullsymmetrisches Ausgangssignal S2 mit der Phasenlage 90° an, deren Signalperioden der Teilungsperiode t der Meßteilung 3 entsprechen. Die Phasendifferenz von 90° zwischen den beiden nullsymmetrischen Ausgangssignalen S1, S2 ermöglicht die Diskriminierung der Meßrichtung X. Die beiden nullsymmetrischen Ausgangssignale S1, S2 werden einer nicht gezeigten Auswerteeinrichtung mit einer Interpolationseinheit zur Gewinnung von Positionsmeßwerten für die Relativlage der beiden Objekte 2, 4 zugeführt.

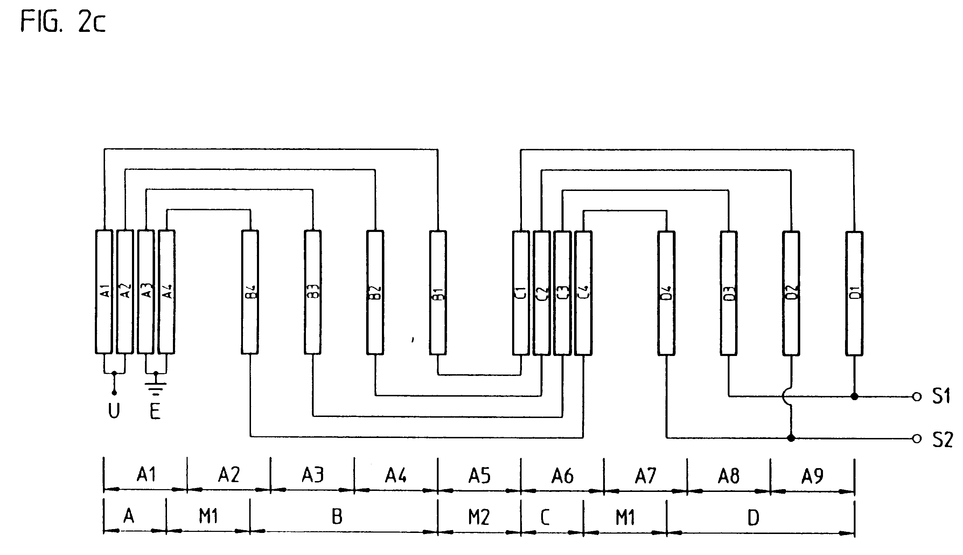

Nach Figur 2c ist die Grundanordnung gemäß Figur 2a durch eine weitere Grundanordnung gemäß Figur 2a ergänzt, die eine dritte Gruppe C aus je vier magnetoresistiven Elementen C1 bis C4 und eine vierte Gruppe D aus je vier magnetoresistiven Elementen D1 bis D4 aufweist. Die beiden Grundanordnungen sind hintereinander in Reihe geschaltet und weisen einen gegenseitigen Mittenabstand M2 von einer Teilungsperiode t auf. Jedes Element Bn der einen Gruppe B ist mit dem phasengleichen Element Cn der anderen Gruppe C in Reihe geschaltet. Auch diese Verbindungen können durch die gewählte Anordnung kreuzungsfrei erfolgen.

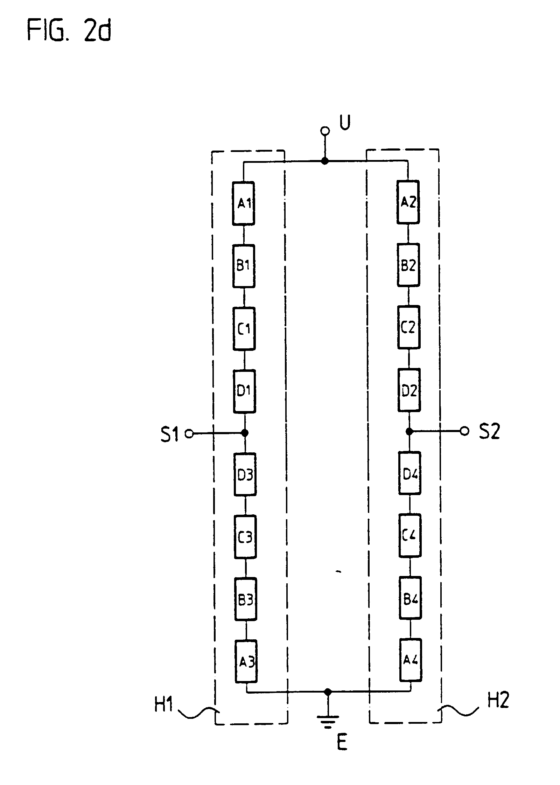

Gemäß der Figur 2d werden die vier magnetoresistiven Elemente A1, B1, C1, D1 mit den Ausgangssignalen der Phasenlage 0° im oberen Brückenzweig und die vier magnetoresistiven Elemente A3, B3, C3, D3 mit den Ausgangssignalen der Phasenlage 180° im unteren Brückenzweig einer ersten Halbbrückenschaltung H1 sowie die vier magnetoresistiven Elemente A2, B2, C2, D2 mit den Ausgangssignalen der Phasenlage 90° im oberen Brückenzweig und die vier magnetoresistiven Elemente A4, B4, C4, D4 mit den Ausgangssignalen der Phasenlage 270° im unteren Brükkenzweig einer zweiten Halbbrückenschaltung H2 jeweils in Reihe zusammengeschaltet; die beiden Halbbrückenschaltungen H1, H2 liegen jeweils mit einem Pol an einer Spannung U und mit dem anderen Pol an Masse E an. Bei der Meßbewegung der Abtasteinheit 5 bezüglich der Meßteilung 3 stehen am Mittelabgriff der ersten Halbbrückenschaltung H1 ein erstes nullsymmetrisches Ausgangssignal S1 mit der Phasenlage 0° und am Mittelabgriff der zweiten Halbbrückenschaltung H2 ein zweites nullsymmetrisches Ausgangssignal S2 mit der Phasenlage 90° an, deren Signalperioden der Teilungsperiode t der Meßteilung 3 entsprechen. Die Phasendifferenz von 90° zwischen den beiden nullsymmetrischen Ausgangssignalen S1, S2 ermöglicht die Diskriminierung der Meßrichtung X. Die beiden nullsymmetrischen Ausgangssignale S1, S2 werden einer nicht gezeigten Auswerteeinrichtung mit einer Interpolationseinheit zur Gewinnung von Positionsmeßwerten für die Relativlage der beiden Objekte 2,4 zugeführt.

Anstelle von zwei Grundanordnungen können auch mehrere Grundanordnungen gemäß Figur 2a in Reihe geschaltet werden.

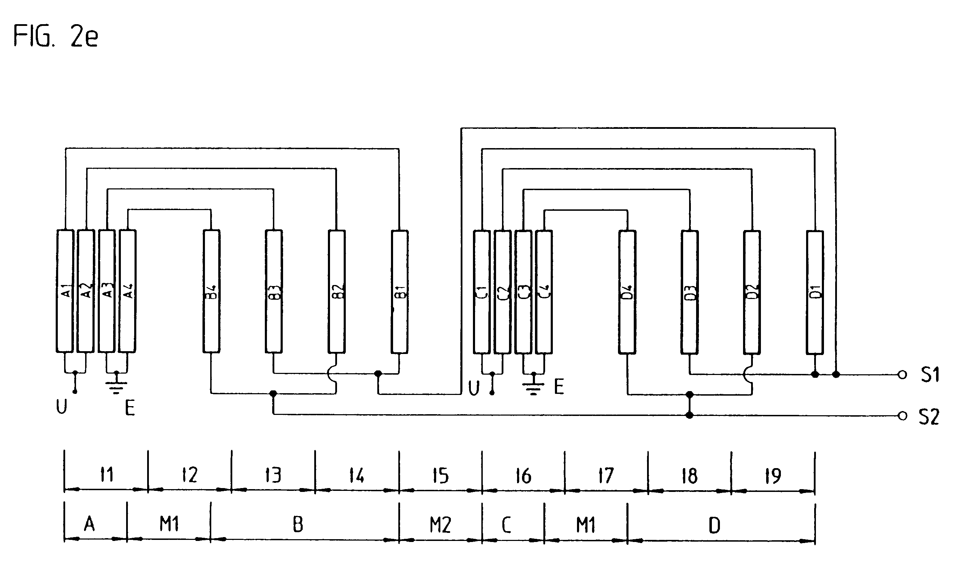

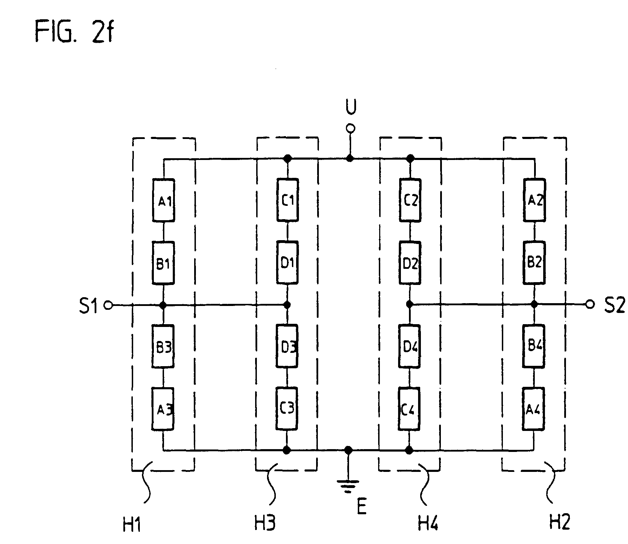

Um eine Signalverstärkung zu erreichen, können auch mehrere Grundanordnungen nach Figur 2a vorteilhaft parallel verschaltet werden. Eine derartige Parallelschaltung von zwei Grundanordnungen mit einem gegenseitigen Abstand von M2=t ist in Figur 2e dargestellt. Die entsprechende Verschaltung der Elemente An, Bn, Cn, Dn zu Halbbrücken H1 bis H4 ist in Figur 2f gezeigt. Es ist ersichtlich, daß durch die zwei Gruppen C und D magnetoresistiver Elemente Cn, Dn weitere Halbbrücken H3 und H4 gebildet werden. Die Halbbrücke H3 liefert ebenfalls das Signal S1 mit der Phasenlage 0° und die Halbbrücke H4 das Signal S2 mit der Phasenlage 90°. Die magnetoresistiven Elemente Cn, Dn der zweiten Grundanordnung sind innerhalb der Halbbrücken H3, H4 ebenso angeordnet wie die bereits ausführlich beschriebene Anordnung der Elemente An, Bn der ersten Grundanordnung mit den Halbbrücken H1, H2. Eine weitere Erläuterung erübrigt sich daher. In nicht gezeigter Weise können auch mehr als zwei Grundanordnungen parallel geschaltet werden.

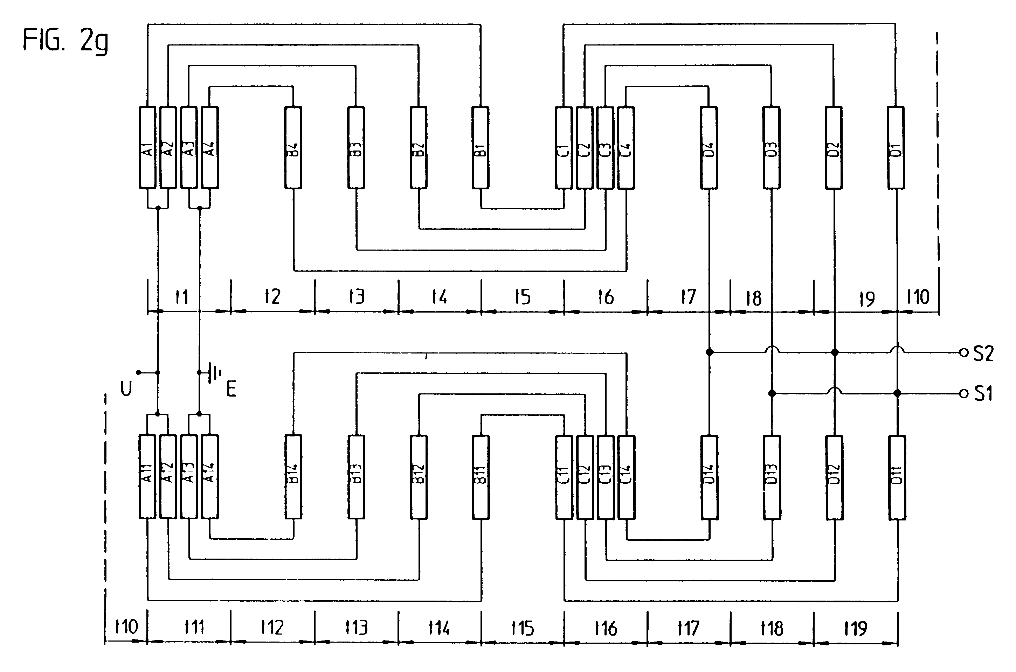

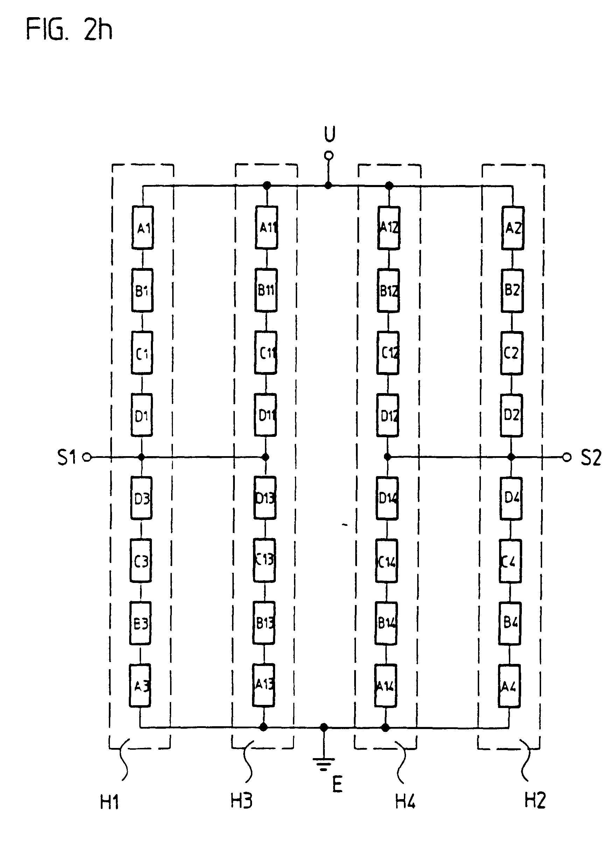

Eine weitere vorteilhafte Möglichkeit besteht darin, der gezeigten Reihenschaltung nach den Figuren 2c und 2d eine oder mehrere dieser Reihenschaltungen parallel zu schalten. Die Elemente dieser weiteren Reihenschaltung sind mit A1n, B1n bezeichnet. Diese Anordnung ist in Figur 2g dargestellt. Die Schaltung hierzu ist in Figur 2h im Detail gezeigt. Es ist erkennbar, daß zur Erzeugung des Signales S1 der ersten Halbbrücke H1 eine weitere Halbbrücke H3 parallel geschaltet ist. Ebenso ist zur Erzeugung des Signales S2 der zweiten Halbbrücke H2 eine weitere Halbbrücke H4 parallel geschaltet. Der Abstand zwischen den beiden Reihenschaltungen entspricht einer Teilungsperiode t.

In analoger Weise können mehrere Parallelschaltungen nach den Figuren 2e und 2f in Reihe geschaltet werden. Diese Anordnung wurde nicht dargestellt.

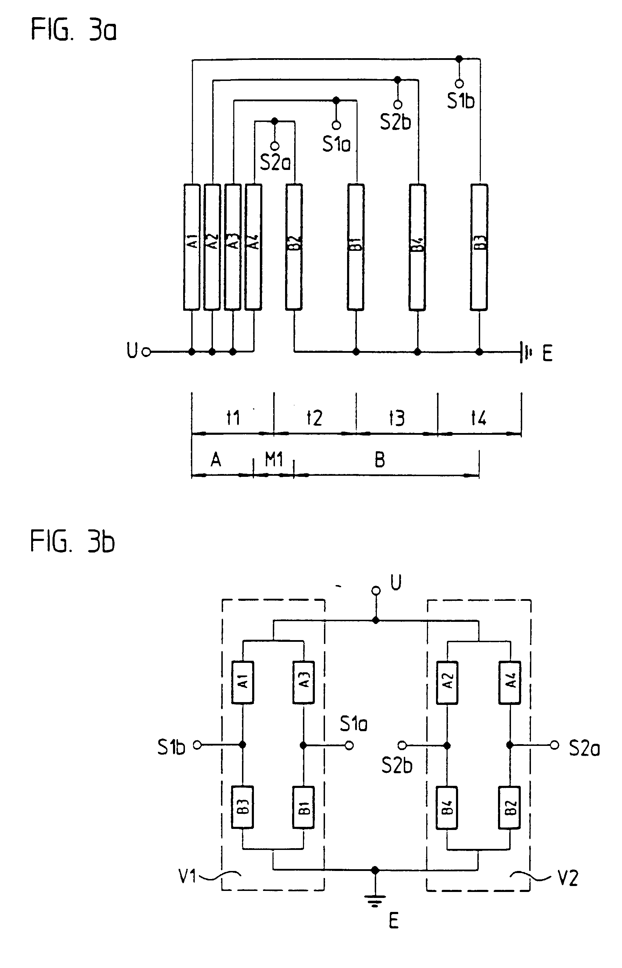

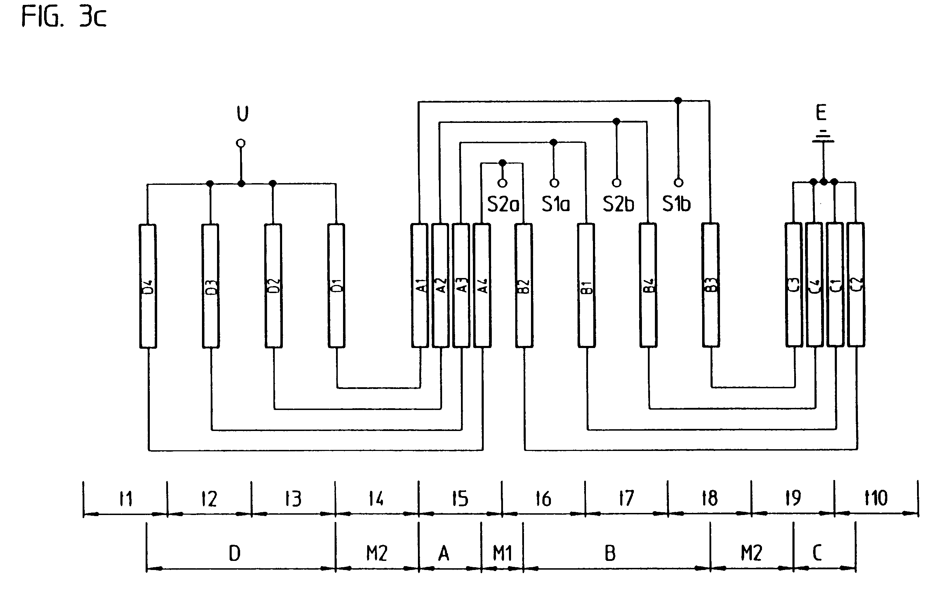

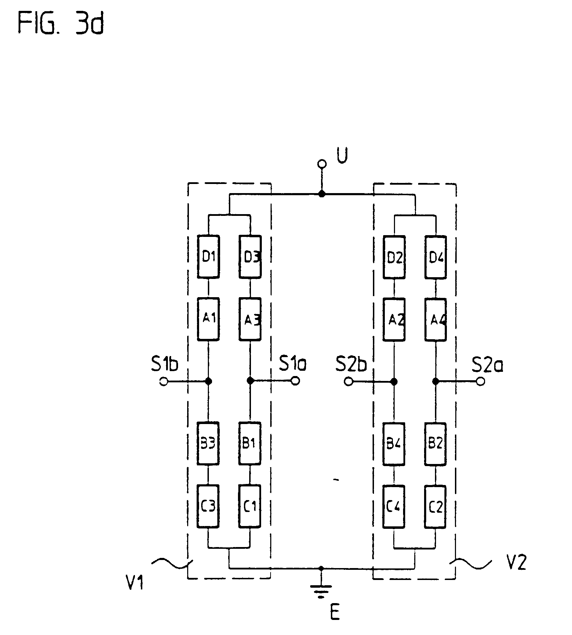

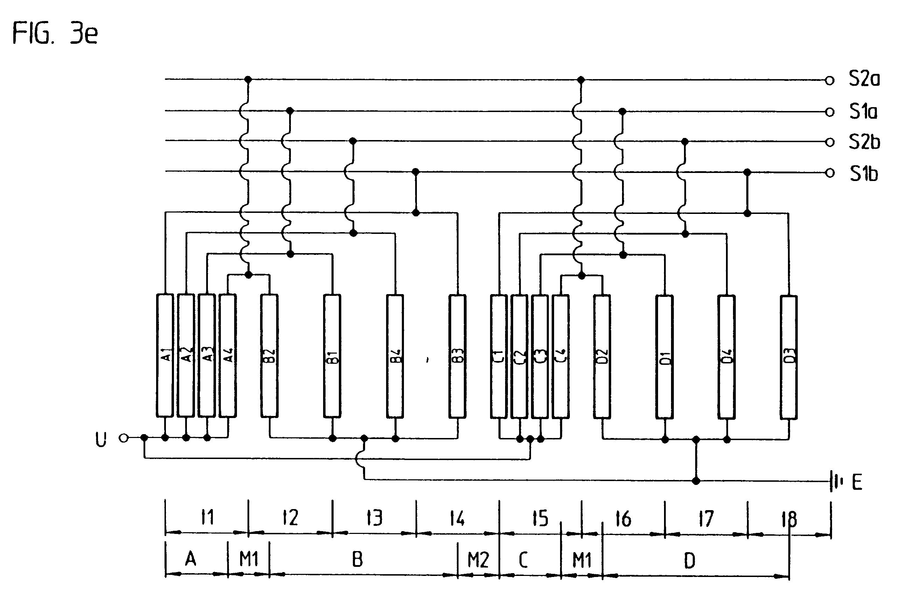

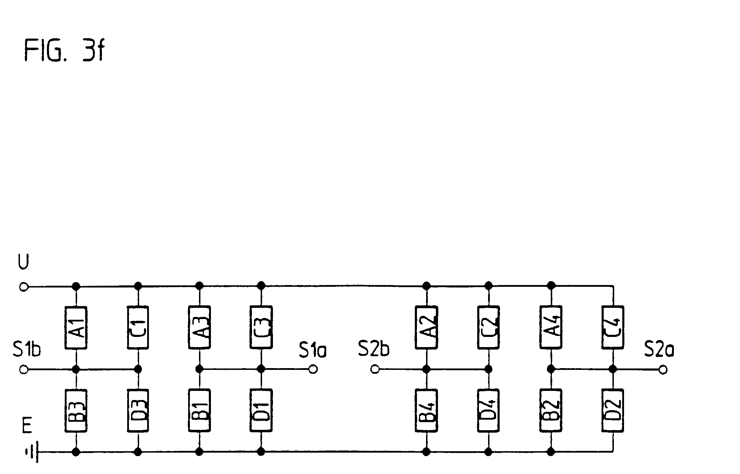

Die magnetoresistiven Elemente An, Bn der Grundanordnungen können auch zu Vollbrücken zusammengeschaltet werden, wie in den nachfolgend beschriebenen Figuren 3 dargestellt ist.

Nach Figur 3a erstrecken sich die streifenförmigen magnetoresistiven Elemente An, Bn der beiden Gruppen A, B senkrecht zur Meßrichtung X und sind in Meßrichtung X parallel zueinander angeordnet. Die vier magnetoresistiven Elemente A1 bis A4 der ersten Gruppe A erstrecken sich über die erste Teilungsperiode t1 der Meßteilung 3 mit einem gegenseitigen Phasenversatz von einem Viertel der ersten Teilungsperiode t1, mit t1=t2=t3=tn=t. Es sind somit das erste magnetoresistive Element A1 mit dem Ausgangssignal der Phasenlage 0° an der ersten Position "0°", das zweite magnetoresistive Element A2 mit dem Ausgangssignal der Phasenlage 90° an der zweiten Position "90°", das dritte magnetoresistive Element A3 mit dem Ausgangssignal der Phasenlage 180° an der dritten Position "180°" und das vierte magnetoresistive Element A4 mit dem Ausgangssignal der Phasenlage 270° an der vierten Position "270°" der ersten Teilungsperiode t1 angeordnet.

Die vier magnetoresistiven Elemente B1 bis B4 der zweiten Gruppe B sind in den benachbarten Teilungsperioden t2, t3, t4 der Meßteilung 3 angeordnet. Der gegenseitige Abstand der magnetoresistiven Elemente B1 bis B4 beträgt 3t/4. Der Abstand M1 des letzten Elementes A4 der ersten Gruppe A zum ersten Element B2 der zweiten Gruppe B beträgt t/2. Ausgehend von der Mitte M1 beider Gruppen A, B, d.h. vom Abstand M1 beider Gruppen A, B ist jeweils das N-te magnetoresistive Element An der einen Gruppe A mit dem N-ten Element Bn der anderen Gruppe B elektrisch verbunden, mit N=1 bis 4. Das Element A4 mit der Phasenlage 270° ist somit mit dem Element B2 mit der Phasenlage 90° elektrisch verbunden, das Element A3 mit der Phasenlage 180° mit dem Element B1 mit der Phasenlage 0°, das Element A2 mit der Phasenlage 90° mit dem Element B4 mit der Phasenlage 270° und das Element A1 mit der Phasenlage 0° mit dem Element B3 mit der Phasenlage 180°. Jedes Element An der einen Gruppe A ist mit dem gegenphasigen Element Bn der anderen Gruppe B verbunden. Durch die gewählte Anordnung verlaufen die Verbindungsleitungen zwischen den Elementen An der einen Gruppe A und den Elementen Bn der anderen Gruppe B kreuzungsfrei.

In Figur 3b ist im Detail dargestellt, wie die einzelnen magnetoresistiven Elemente An, Bn zusammengeschaltet sind. Das Element A1 der ersten Gruppe A mit der Phasenlage 0° bildet einen Zweig einer ersten Halbbrücke, im zweiten Zweig ist das Element B3 der zweiten Gruppe B mit der Phasenlage 180° angeordnet, am Mittenabgriff steht das Signal S1b mit der Phasenlage 0° an. Parallel zu dieser ersten Halbbrücke ist eine zweite Halbbrücke mit den Elementen A3, B1 angeordnet. Parallel zu dem Element A1 ist das gegenphasige Element A3 der gleichen Gruppe A angeordnet und parallel zu dem Element B3 das gegenphasige Element B1 der gleichen Gruppe B. Am Mittenabgriff werden die um 180° gegeneinander phasenverschobenen Signale S1a und S2b abgegriffen.

Beide Halbbrücken bilden eine Vollbrücke V1, wobei an den Elementen A1, A3 eine Versorgungsspannung U und an den Elementen B3, B1 die Masse E angeschlossen ist. Parallel zu dieser ersten Vollbrücke B1 ist eine zweite Vollbrücke V2 angeordnet. Sie ist ebenso aufgebaut wie die Vollbrücke V1. Die eine Halbbrücke wird von den Elementen A2 und B4, die andere Halbbrücke von den Elementen A4 und B2 gebildet. An den Mittenabgriffen werden die um 180° gegeneinander phasenverschobenen Signale S2a und S2b abgegriffen. Die Phasenlage der Elemente A2, A4, B4, B2 der zweiten Vollbrücke V2 unterscheidet sich von der Phasenlage der Elemente A1, A3, B3, B1 der ersten Vollbrücke V1 um 90°, so daß sich auch die Phasenlage der Signale S1a, S1b von der Phasenlage der Signale S2a, S2b um 90° unterscheidet.

Analog zu den bereits beschriebenen Anordnungen nach den Figuren 2 können mehrere Grundanordnungen nach Figur 3a, 3b zu Reihenschaltungen, zu Parallelschaltungen oder zu kombinierten Reihen-Parallelschaltungen zusammengeschaltet werden. Eine derartige Reihenschaltung von zwei Grundanordnungen ist in den Figuren 3c und 3d dargestellt. In Meßrichtung X gesehen, ist neben dem letzten Element B3 der ersten Grundanordnung die erste Gruppe C mit den Elementen Cn der zweiten Grundanordnung in einem Abstand M2 von einer Teilungsperiode t angeordnet. Jedes Element Bn der einen Grundanordnung ist jeweils mit dem gleichphasigen Element Cn der weiteren Grundanordnung in Reihe geschaltet und die Elemente Bn, Cn sind kreuzungsfrei miteinander verbunden. Ebenso ist die zweite Gruppe D der zweiten Grundanordnung neben den Elementen An der ersten Gruppe A der ersten Grundanordnung im Abstand M2 von einer Teilungsperiode t angeordnet. Die gleichphasigen Elemente Dn, An der beiden Gruppen D, A sind jeweils in Reihe geschaltet und kreuzungsfrei miteinander verbunden.

Eine weitere Möglichkeit besteht darin, mehrere Grundanordnungen gemäß den Figuren 3a, 3b parallel zu verschalten. Diese Anordnung ist in den Figuren 3e und 3f gezeigt. Die zwei Grundanordnungen sind mit einem gegenseitigen Abstand M2 von t/2 nebeneinander angeordnet. Die gleichen Signalabgriffe sind jeweils miteinander verbunden.

In nicht gezeigter Weise sind analog zu den beschriebenen Halbbrückenschaltungen auch hier Kombinationen zwischen den Reihen- und Parallelschaltungen möglich.

Um aus den vier Signalen S1a, S1b, S2a, S2b zwei gegeneinander um 90° phasenverschobene Signale zu erhalten, werden die jeweils gegenphasigen Signale S1a, S1b sowie S2a, S2b einem Differenzverstärker zugeführt, an dessen Ausgängen dann die um 90° gegeneinander phasenverschobenen Signale S1, S2 anstehen.

In nicht gezeigter Weise können in jeder Gruppe der Grundanordnungen auch mehr als vier magnetoresistive Elemente angeordnet werden, dies gilt für alle Ausführungsbeispiele.

Wie bereits erläutert, ist gemäß der Erfindung die kreuzungsfreie Verbindung der magnetoresistiven Elemente An, Bn der einen Gruppe A mit der anderen Gruppe B wesentlich. Dies wird durch die beschriebenen Anordnungen, also durch die gewählte Reihenfolge der Elemente An, Bn erreicht. Die Verbindungsleitungen dieser Elemente An, Bn sind so gelegt, daß ausgehend von der Mitte M1 der Gruppen A, B die Verbindungsleitungen der N-ten Elemente An, Bn näher an den Elementen An, Bn verlaufen, als die Verbindungsleitungen der (N+1)-ten Elemente An, Bn, wobei alle Verbindungsleitungen parallel zueinander verlaufen.

Zu beachten ist, daß der Index n der Elemente die Phasenlage der Elemente in Bezug zur Meßteilung 3 definiert. Beispielsweise bei n=1 bis 4 ist mit n=1 die Phasenlage 0° mit n=2 die Phasenlage 90°, mit n=3 die Phasenlage 180° und mit n=4 die Phasenlage 270° definiert. Der Index N dagegen entspricht einer Durchnummerierung der aufeinander folgenden Elemente, ausgehend von einem Bezugspunkt.

Die Erfindung ist nicht auf die gezeigte Längenmeßeinrichtung beschränkt, sie ist auch bei Winkelmeßeinrichtungen einsetzbar. Die Meßteilung und ggf. auch die magnetoresistiven Elemente zur Abtastung der Meßteilung sind dann nicht linear, sondern auf einem Kreisbogen oder einem sich schließenden Kreis angeordnet. Beim Einsatz in Winkelmeßeinrichtungen kann gemäß der Erfindung auch vorteilhaft eine Rundumabtastung realisiert werden, wenn die Grundanordnungen mit den magnetoresistiven Elementen über den gesamten Umfang angeordnet sind.

## Patentansprüche

1. Positionsmeßeinrichtung zur Messung der Relativlage zweier zueinander beweglicher Objekte (2, 4), bei der eine periodische Meßteilung (3) von einer Abtasteinheit (5) mittels magnetoresistiver Elemente (An, Bn) zur Erzeugung von positionsabhängigen Ausgangssignalen (S1, S2) abgetastet wird, aus denen in einer Auswerteeinrichtung Positionsmeßwerte für die Relativlage der beiden Objekte (2, 4) gebildet werden, in welcher,
a) die Abtasteinheit (5) wenigstens eine Grundanordnung aus zwei Gruppen (A-B) aus jeweils mindestens vier magnetoresistiven Elementen (An-Bn) aufweist, und
b) die magnetoresistiven Elemente (An) der ersten Gruppe (A) jeder Grundanordnung innerhalb einer Teilungsperiode (t) der Meßteilung (3) angeordnet, sind,
gekennzeichnet durch folgende Merkmale:
c) die magnetoresistiven Elemente (Bn) der zweiten Gruppe (B) jeder Grundanordnung sind in den benachbarten Teilungsperioden (t) der Meßteilung (3) angeordnet,
d) ausgehend von der Mitte (M1) beider Gruppen (A, B) ist jeweils das N-te magnetoresistive Element (An) der einen Gruppe A mit dem N-ten magnetoresistiven Element (Bn) der anderen Gruppe (B) elektrisch verbunden, so daß sich diese elektrischen Verbindungen nicht kreuzen.

2. Positionsmeßeinrichtung nach Anspruch 1, dadurch gekennzeichnet, daß jede Gruppe (A, B) jeweils vier magnetoresistive Elemente (An, Bn) aufweist, daß die vier magnetoresistiven Elemente (An) der ersten Gruppe (A) innerhalb einer Teilungsperiode (t) der Meßteilung (3) mit einem jeweiligen gegenseitigen Abstand (M1) von t/4 angeordnet sind, und daß die vier magnetoresistiven Elemente (Bn) der zweiten Gruppe (B) mit einem jeweiligen gegenseitigen Abstand von 3t/4 angeordnet sind.

3. Positionsmeßeinrichtung nach Anspruch 1 oder Anspruch 2, dadurch gekennzeichnet, daß die jeweils elektrisch miteinander in Reihe geschalteten Elemente (An, Bn) der zwei Gruppen (A, B) gleiche Phasenlagen in Bezug zur Meßteilung (3) aufweisen und einen Brückenzweig einer Halbbrücke (H) bilden, wobei die Phasenlage der magnetoresistiven Elemente (An, Bn) des einen Brückenzweiges der Halbbrückenschaltungen (H) gegenüber der Phasenlage der magnetoresistiven Elemente (An, Bn) des anderen Brückenzweiges um t/2 phasenverschoben sind, und daß die positionsabhängigen Ausgangssignale (S1, S2) an den Verbindungspunkten der Brückenzweige anstehen.

4. Positionsmeßeinrichtung nach Anspruch 3, dadurch gekennzeichnet, daß mehrere Grundanordnungen in Reihe geschaltet sind, wobei die Grundanordnungen in Meßrichtung X einen gegenseitigen Abstand (M2) von einer Teilungsperiode t aufweisen und alle magnetoresistiven Elemente (An, Bn, Cn, Dn) mit gleicher Phasenlage in Reihe geschaltet sind und jeweils einen Brückenzweig der zwei Halbbrücken (H1, H2) bilden.

5. Positionsmeßeinrichtung nach Anspruch 3, dadurch gekennzeichnet, daß mehrere Grundanordnungen parallel zueinander geschaltet sind, wobei die Grundanordnungen in Meßrichtung X einen gegenseitigen Abstand (M2) von einer Teilungsperiode t aufweisen.

6. Positionsmeßeinrichtung nach Anspruch 4, dadurch gekennzeichnet, daß mehrere Reihenschaltungen von Grundanordnungen parallel zueinander geschaltet sind.

7. Positionsmeßeinrichtung nach Anspruch 1 oder Anspruch 2, dadurch gekennzeichnet, daß die Phasenlage der jeweils kreuzungsfrei miteinander verbundenen Elemente (An, Bn) der zwei Gruppen (A, B) sich um 180° unterscheidet und die zwei Gruppen (A, B) in Meßrichtung X in einem gegenseitigen Abstand (M1) von t/2 angeordnet sind, und daß jeweils zwei kreuzungsfrei miteinander verbundene Elemente (An, Bn) eine Halbbrücke bilden, und daß an den Mittenabgriffen der Halbbrücken vier um jeweils 90° phasenverschobene positionsabhängige Ausgangssignale (S1a, S1b, S2a, S2b) anstehen.

8. Positionsmeßeinrichtung nach Anspruch 7, dadurch gekennzeichnet, daß mehrere Grundanordnungen in Reihe hintereinander geschaltet sind, wobei die Grundanordnungen in einem gegenseitigen Abstand (M2) von t angeordnet sind.

9. Positionsmeßeinrichtung nach Anspruch 7, dadurch gekennzeichnet, daß mehrere Grundanordnungen parallel zueinander geschaltet sind, wobei die Grundanordnungen in einem gegenseitigen Abstand (M2) von t/2 angeordnet sind.

10. Positionsmeßeinrichtung nach Anspruch 8, dadurch gekennzeichnet, daß mehrere Reihenschaltungen von Grundanordnungen parallel zueinander geschaltet sind.

## Claims

1. Position-measuring device for measuring the relative position of two objects (2, 4) movable relative to one another, in which a periodic measurement division (3) is scanned by a scanner unit (5) by means of magnetoresistive elements (An, Bn) to generate position-dependent output signals (S1, S2) from which position measurement values for the relative position of the two objects (2, 4) are formed in an evaluation device in which
a) the scanner unit (5) has at least one basic array comprising two groups (A-B) consisting respectively of at least four magnetoresistive elements (An-Bn), and
b) the magnetoresistive elements (An) of the first group (A) of each basic array are arranged within one division period (t) of the measurement division (3),
**characterised by** the following features:
c) the magnetoresistive elements (Bn) of the second group (B) of each basic array are arranged in the adjacent division periods (t) of the measurement division (3),
d) proceeding from the centre (M1) of the two groups, (A,B), respectively the nth magnetoresistive element (An) of the one group A is electrically connected with the nth magnetoresistive element (Bn) of the other group (B), such that these electrical connections do not cross.

2. Position-measuring device according to claim 1, **characterised in that** each group (A, B) has respectively four magnetoresistive elements (An, Bn), in that the four magnetoresistive elements (An) of the first group (A) are arranged within one division period (t) of the measurement division (3) with a respective mutual spacing (M1) of t/4, and in that the four magnetoresistive elements (Bn) of the second group (B) are arranged with a respective mutual spacing of 3t/4.

3. Position-measuring device according to claim 1 or claim 2, **characterised in that** the elements (An, Bn), respectively electrically connected in series with one another, of the two groups (A, B) have the same phase positions in respect of the measurement division (3) and form a bridge arm of a half bridge (H), the phase position of the magnetoresistive elements (An, Bn) of the one bridge arm of the half bridge circuits (H) being offset in phase by t/2 in relation to the phase position of the magnetoresistive elements (An, Bn) of the other bridge arm, and in that the position-dependent output signals are present at the connecting points of the bridge arms.

4. Position-measuring device according to claim 3, **characterised in that** a plurality of basic arrays are connected in series, the basic arrays in the X measurement direction being at a mutual spacing (M2) from a division period t, and all the magnetoresistive elements (An, Bn, Cn, Dn) being connected in series with the same phase position and forming in each case one bridge arm of the two half bridges (H1, H2).

5. Position-measuring device according to claim 3, **characterised in that** a plurality of basic arrays are connected in parallel with one another, the basic arrays in the X measurement direction being at a mutual spacing (M2) from a division period t.

6. Position-measuring device according to claim 4, **characterised in that** a plurality of series circuits of basic arrays are connected in parallel with one another.

7. Position-measuring device according to claim 1 or claim 2, **characterised in that** the phase position of the elements (An, Bn), respectively connected to one another without crossing, of the two groups (A, B) differ by 180° and the two groups (A, B) in the X measurement direction are arranged at a mutual spacing (M1) of t/2, and in that respectively two elements (An, Bn), connected to one another without crossing, form a half bridge, and in that four position-dependent output signals (S1a, S1b, S2a, S2b), respectively offset in phase by 90°, are present at the centre taps of the half bridges.

8. Position-measuring device according to claim 7, **characterised in that** a plurality of basic arrays are connected in series, the basic arrays being arranged at a mutual spacing (M2) of t.

9. Position-measuring device according to claim 7, **characterised in that** a plurality of basic arrays are connected in parallel with one another, the basic arrays being arranged at a mutual spacing (M2) of t/2.

10. Position-measuring device according to claim a, **characterised in that** a plurality of series circuits of basic arrays are connected in parallel with one another.

## Revendications

1. Dispositif de mesure de position pour la mesure de la position relative de deux objets (2, 4) mobiles l'un par rapport à l'autre, dans lequel une graduation de mesure (3) périodique est explorée par une unité d'exploration (5) à l'aide d'éléments magnéto-résistifs (An, Bn) en vue de la production de signaux de sortie (S1, S2) variables en fonction de la position, à partir desquels des valeurs de mesure de position pour la position relative des deux objets (2, 4) sont formées dans un dispositif d'exploitation, dispositif de mesure dans lequel
a) l'unité d'exploration (5) présente au moins un agencement de base de deux groupes (A-B) d'au moins quatre éléments magnéto-résistifs (An-Bn) chacun, et
b) les éléments magnéto-résistifs (An) du premier groupe (A) de chaque agencement de base sont disposés à l'intérieur d'une période (t) de la graduation de mesure (3),
caractérisé par les caractéristiques suivantes :
c) les éléments magnéto-résistifs (Bn) du deuxième groupe (B) de chaque agencement de base sont disposés dans les périodes (t) voisines de la graduation de mesure (3),
d) à partir du milieu (M1) des deux groupes (A, B), le N-ième élément magnéto-résistif (An) d'un groupe (A) est relié électriquement respectivement au N-ième élément magnéto-résistif (Bn) de l'autre groupe (B) de manière que ces liaisons électriques ne se croisent pas.

2. Dispositif de mesure de position suivant la revendication 1, caractérisé par le fait que chaque groupe (A, B) présente quatre éléments magnéto-résistifs (An, Bn), que les quatre éléments magnéto-résistifs (An) du premier groupe (A) sont disposés à l'intérieur d'une période (t) de la graduation de mesure (3) avec une distance réciproque (M1) de t/4, respectivement, et que les quatre éléments magnéto-résistifs (Bn) du deuxième groupe (B) sont disposés avec une distance réciproque de 3t/4 respectivement.

3. Dispositif de mesure de position suivant la revendication 1 ou la revendication 2, caractérisé par le fait que les éléments (An, Bn) des deux groupes (A, B), montés électriquement en série respectivement, présentent les mêmes positions de phase par rapport à la graduation de mesure (3) et constituent une branche d'un demi-pont (H), la position de phase des éléments magnéto-résistifs (An, Bn) d'une branche des demi-ponts (H) étant décalée de t/2 par rapport à la position de phase des éléments magnéto-résistifs (An, Bn) de l'autre branche, et que les signaux de sortie (S1, S2) variables en fonction de la position sont recueillis sur les points de liaison des branches.

4. Dispositif de mesure de position suivant la revendication 3, caractérisé par le fait que plusieurs agencements de base sont montés en série, les agencements de base présentant dans la direction de mesure X une distance réciproque (M2) d'une période t et tous les éléments magnéto-résistifs (An, Bn, Cn, Dn) ayant la même position de phase étant montés en série et formant respectivement une branche des deux demi-ponts (H1, H2).

5. Dispositif de mesure de position suivant la revendication 3, caractérisé par le fait que plusieurs agencements de base sont montés en parallèle, les agencements de base présentant dans la direction de mesure X une distance réciproque (M2) d'une période t.

6. Dispositif de mesure de position suivant la revendication 4, caractérisé par le fait que plusieurs circuits en série d'agencements de base sont montés en parallèle.

7. Dispositif de mesure de position suivant la revendication 1 ou la revendication 2, caractérisé par le fait que les positions de phase des éléments (An, Bn) des deux groupes (A, B), reliés respectivement entre eux sans croisement, sont décalées de 180° et les deux groupes (A, B) sont disposés dans la direction de mesure X à une distance réciproque (M1) de t/2, que deux éléments (An, Bn) reliés entre eux sans croisement formant respectivement un demi-pont, et que quatre signaux de sortie (S1a, S1b, S2a, S2b) variables en fonction de la position, décalés respectivement de 90°, sont recueillis sur les prises médianes des demi-ponts.

8. Dispositif de mesure de position suivant la revendication 7, caractérisé par le fait que plusieurs agencements de base sont montés en série, les agencements de base étant disposés à une distance réciproque (M2) de t.

9. Dispositif de mesure de position suivant la revendication 7, caractérisé par le fait que plusieurs agencements de base sont montés en parallèle, les agencements de base étant disposés à une distance réciproque (M2) de t/2.

10. Dispositif de mesure de position suivant la revendication 8, caractérisé par le fait que plusieurs circuits en série d' agencements de base sont montés en parallèle.
